(19) Europäisches Patentamt / European Patent Office / Office européen des brevets

(11) **EP 4 393 773 A1**

(12) **EUROPEAN PATENT APPLICATION**

(43) Date of publication:
**03.07.2024 Bulletin 2024/27**

(21) Application number: **23219559.4**

(22) Date of filing: **21.12.2023**

(51) International Patent Classification (IPC):
**B60Q 1/08** *(2006.01)*     **B60Q 1/14** *(2006.01)*

(52) Cooperative Patent Classification (CPC):
**B60Q 1/143; B60Q 1/08;** B60Q 2300/056;
B60Q 2300/45

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.12.2022 CN 202211709481**

(71) Applicant: **Nio Technology (Anhui) Co., Ltd
Hefei City, Anhui 230601 (CN)**

(72) Inventors:
• **YU, Yongkun
  Anhui, 230601 (CN)**
• **SUN, Peng
  Anhui, 230601 (CN)**
• **JIN, Haofeng
  Anhui, 230601 (CN)**
• **WU, Xiaofeng
  Anhui, 230601 (CN)**
• **XIE, Wang
  Anhui, 230601 (CN)**

(74) Representative: **Dr. Solf & Zapf
Patent- und Rechtsanwalts PartG mbB
Candidplatz 15
81543 München (DE)**

(54) **ILLUMINATION CONTROL METHOD, SYSTEM, DEVICE, STORAGE MEDIUM AND COMPUTER PROGRAM PRODUCT**

(57)     An illumination control method which comprises: obtaining own vehicle parameters of a vehicle related to the body size (202); obtaining position information of a target object (204); obtaining a first target angle range of the target object relative to a right headlight and a second target angle range relative to a left headlight on the basis of the own vehicle parameters and the position information (206); performing matching on the pixelated units on the basis of the first target angle range and the second target angle range to obtain the target pixelated unit (208); and completing an illumination-related action according to the target pixelated unit (210). The use of this method can improve the control accuracy of controlling the illumination range in front of the vehicle. The most effective and reliable illumination is ensured while preventing dazzling to the pedestrian and the vehicle.

FIG. 3

## Description

## TECHNICAL FIELD

The disclosure relates to the technical field of vehicle light control, and in particular to an illumination control method, a system, a device, a storage medium and a computer program product.

## BACKGROUND

Matrix headlights generally refer to a number of LED light sources arranged in a rectangular array. Each LED light source corresponds to an illumination area in front of a vehicle. Under the control of a controller, the turning on and off of each LED light source is controlled such that the area in front of the vehicle can be illuminated in a variable range. For example, turning off some of high-beam headlights while driving can reduce the dazzling problem for oncoming drivers to a certain extent and improve the safety of vehicles driving at night.

The implementation of fully intelligent matrix headlights is a systematic project that requires technical support from both hardware and software. In terms of hardware, suspension travel sensors, steering wheel angle sensors, illuminance sensors, vehicle light control modules and high-resolution cameras are required, and there are also great requirements on the manufacturing capabilities of vehicle manufacturers, especially in terms of light source modules and manufacturing accuracy. In terms of software, powerful image recognition processing capabilities are required. The collaborative work of these systems can create an intelligent illumination system, enabling the vehicle to respond to environmental changes and provide appropriate illumination modes.

However, due to technical and cost constraints, the control accuracy of most matrix headlights is relatively poor, causing the matrix headlights to turn off a wrong LED light source, so that an area that requires safety illumination does not receive enough light, which will increase the safety hazards of driving at night.

## SUMMARY

In view of this, it is necessary to address the above technical problems and provide an illumination control method, a device, a computer apparatus, a computer-readable storage medium and a computer program product, which can improve the illumination range control accuracy.

In a first aspect, the disclosure provides an illumination control method for a vehicle comprising a headlight, the headlight comprising a number of independently controlled pixelated units, the method comprising:

obtaining own vehicle parameters comprising a body size and a headlight mounting position of the vehicle;
obtaining position information of a target object;

determining an angle range of the target object relative to the headlight according to the own vehicle parameters and the position information;
matching a target pixelated unit among the pixelated units with the target object on the basis of the angle range; and
performing illumination control on the headlight according to the target pixelated unit.

In one embodiment, when the vehicle comprises a plurality of headlights, for different headlights, respective independent software control schemes are used to realize illumination control of the corresponding headlights.

In one embodiment, performing illumination control on the headlight according to the target pixelated unit comprises:

determining the type of the target object; and
performing a corresponding headlight illumination control strategy according to the type of the target object.

In one embodiment, performing a corresponding headlight illumination control strategy according to the type of the target object consists in that

when the type of the target object is a vehicle or a pedestrian, the headlight illumination control strategy comprises controlling the turning on or off of the target pixelated unit;
and/or
when the type of the target object is a sign, the headlight illumination control strategy comprises adjusting down the brightness of the target pixelated unit.

In one embodiment, when there are a plurality of target objects, matching a target pixelated unit among the pixelated units with the target object comprises:

matching a first target pixelated unit among the pixelated units of the headlight respectively with each target object; and
calculating an overlapping pixelated unit of the first target pixelated units of the plurality of target objects; and
performing illumination control on the headlight according to the target pixelated unit comprises:
implementing a control strategy for turning on or off the target pixelated unit on the overlapping pixelated unit, and implementing a control strategy for adjusting the brightness of the first target pixelated units on the first target pixelated units.

In one embodiment, the headlight comprises a left headlight and a right headlight, and obtaining own vehicle parameters comprising a body size and a headlight mounting position of the vehicle comprises:

obtaining a reference point from the vehicle; the reference point comprising a vehicle origin, a first center point corresponding to the right headlight and a second center point corresponding to the left headlight; obtaining a first distance of the first center point or the second center point relative to the vehicle origin along a first axial direction of the vehicle; obtaining a second distance of the first center point relative to the vehicle origin along a second axial direction of the vehicle; obtaining a third distance of the second center point relative to the vehicle origin along the second axial direction of the vehicle; obtaining a height above the ground of the first center point or the second center point; and determining the own vehicle parameters according to the first distance, the second distance, the third distance and the height above the ground.

In one embodiment, obtaining position information of a target object comprises:

collecting environmental information in front of the vehicle; determining a target boundary of the target object on the basis of the environmental information; selecting a plurality of key points from the target boundary; obtaining, for each of the key points, an included angle, projected onto a horizontal plane, between a straight line where the key point and the vehicle origin are located and the first axial direction of the vehicle, and determining a transverse angle according to the included angle projected onto the horizontal plane; obtaining, for each of the key points, an included angle between the straight line where the key point and the vehicle origin are located and the horizontal plane, and determining a longitudinal angle according to the included angle with the horizontal plane; obtaining a fourth distance of each of the key points relative to the first center point or the second center point along the first axial direction of the vehicle; and determining the position information according to the transverse angle, the longitudinal angle and the fourth distance.

In one embodiment, determining an angle range of the target object relative to the headlight according to the own vehicle parameters and the position information comprises:

determining a first target transverse angle corresponding to each of the key points according to the transverse angle, the first distance, the fourth distance and the second distance; the first target transverse angle being an included angle, projected onto the horizontal plane, between a straight line where the key point and the first center point are located and the first axial direction of the vehicle; determining a second target transverse angle corresponding to each of the key points according to the transverse angle, the first distance, the fourth distance and the third distance; the second target transverse angle being an included angle, projected onto the horizontal plane, between a straight line where the key point and the second center point are located and the first axial direction of the vehicle; determining a target longitudinal angle corresponding to each of the key points according to the longitudinal angle, the first distance, the fourth distance and the height above the ground; the target longitudinal angle being an included angle between the straight line where the first center point or the second center point and the key point are located and the horizontal plane; and determining the first target angle range and the second target angle range according to the first target transverse angle, the second target transverse angle and the target longitudinal angle.

In one embodiment, determining the first target angle range and the second target angle range according to the first target transverse angle, the second target transverse angle and the target longitudinal angle comprises:

determining a target longitudinal angle range, which covers the target object with respect to the first center point or the second center point, according to the target longitudinal angle corresponding to each of the key points; determining a first target transverse angle range, which covers the target object with respect to the first center point, according to the first target transverse angle corresponding to each of the key points, and determining the first target angle range according to the first target transverse angle range and the target longitudinal angle range; and determining a second target transverse angle range, which covers the target object with respect to the second center point, according to the second target transverse angle corresponding to each of the key points, and determining the second target angle range according to the second target transverse angle range and the target longitudinal angle range.

In one embodiment, when the headlight comprises a left headlight and a right headlight, determining an angle range of the target object relative to the headlight according to the own vehicle parameters and the position information comprises: obtaining a first target angle range of the target object relative to the right headlight and a second target angle range relative to the left headlight on the basis of the own vehicle parameters and the position information, and matching a target pixelated unit among the pixelated units with the target object on the basis of the angle range comprises:

obtaining a transverse boundary angle and a longitudinal boundary angle corresponding to each of the pixelated units;
comparing the first target angle range with the transverse boundary angle and the longitudinal boundary angle of each of the pixelated units to obtain a first pixelated unit covering the first target angle range;
comparing the second target angle range with the transverse boundary angle and the longitudinal boundary angle of each of the pixelated units to obtain a second pixelated unit covering the second target angle range; and
determining the target pixelated unit according to the first pixelated unit and the second pixelated unit.

In a second aspect, the disclosure also provides an illumination control device for a vehicle comprising a headlight, the headlight comprising a number of independently controlled pixelated units, the device comprising:

a first obtaining module configured to obtain own vehicle parameters comprising a body size and a headlight mounting position of the vehicle;
a second obtaining module configured to obtain position information of a target object;
a processing module configured to determine an angle range of the headlight according to the own vehicle parameters and the position information;
a matching module configured to match a target pixelated unit among the pixelated units with the target object on the basis of the angle range; and
a control module configured to perform illumination control on the headlight according to the target pixelated unit.

In a third aspect, the disclosure also provides a computer apparatus, comprising a memory and a processor. A computer program is stored in the memory. The processor, when executing the computer program, implements the steps of a method of any embodiment of the disclosure.

In a fourth aspect, the disclosure also provides a computer-readable storage medium having a computer program stored thereon. The computer program, when executed by a processor, implements the steps of a method of any embodiment of the disclosure.

In a fifth aspect, the disclosure also provides a computer program product, comprising a computer program. The computer program, when executed by a processor, implements the steps of a method of any embodiment of the disclosure.

In the illumination control method, the device, the computer apparatus, the storage medium and the computer program product described above, independent calculations are performed for the left headlight and the right headlight on the basis of the position information of the target object and the own vehicle parameters related to the body size, to obtain the first target angle range and the second target angle range and perform matching on the pixelated units, and by controlling the matched pixelated unit, precise illumination and anti-glare effects are achieved. Each pixelated unit can be independently controlled to turn on or off, improving the illumination range control accuracy. Moreover, in the disclosure, since the own vehicle parameters are integrated into the calculation of the corresponding target angle ranges of the left headlight and the right headlight for different models and different headlight mounting positions, the matching accuracy of the pixelated units is greatly improved, thereby achieving precise control.

BRIEF DESCRIPTION OF DRAWINGS

FIG. 1 is a diagram of an application environment of an illumination control method in one embodiment;
FIG. 2 is a schematic flowchart of an illumination control method in one embodiment;
FIG. 3 is a top view showing the positional relationship between key points and a vehicle in one embodiment;
FIG. 4 is a side view showing the positional relationship between key points and a vehicle in one embodiment;
FIG. 5 is a schematic diagram showing an illumination range of a headlight in one embodiment;
FIG. 6 is a schematic diagram showing the process of matching cells in one embodiment;
FIG. 7 is a structural block diagram of an illumination control device in one embodiment; and
FIG. 8 is a diagram of the internal structure of a computer apparatus in one embodiment.

DESCRIPTION OF EMBODIMENTS

In order to make the objective, technical solutions, and advantages of the disclosure clearer, the disclosure is further described in detail below with reference to the accompanying drawings and the embodiments. It should be understood that the specific embodiments described herein are merely used to explain the disclosure and are not intended to limit the disclosure.

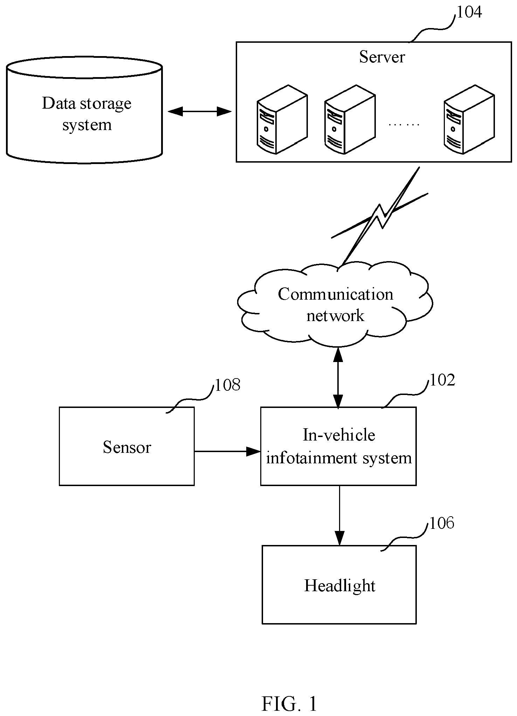

An illumination control method provided in the embodiments of the disclosure may be applied in an application environment as shown in FIG. 1. An in-vehicle infotainment system 102 communicates with a server 104 through a network. A data storage system may store data to be processed by the server 104. The data storage system may be integrated in the server 104 or in the in-vehicle infotainment system 102. The data storage system may store vehicle-related parameters. The in-vehicle infotainment system 102 obtains information collected by a sensor 108, and after analysis and processing, sends a control signal to a headlight 106. The headlight 106 receives a signal and turns off or on the illumination in a specified area. The server 104 may be implemented as an independent server or a server cluster composed of a plurality of servers.

In one embodiment, an illumination control method is provided for a vehicle comprising a left headlight and a right headlight. Each of the left headlight and the right headlight comprises a number of independently controlled pixelated units.

The pixelated units refer to units that are arranged in a matrix and can be controlled individually or independently. These pixelated units are manipulated in an appropriate manner to adjust the light output of the headlight according to a respective image of a sequence of images that corresponds to the control signal of the in-vehicle infotainment system 102. Therefore, the pixelated units are preferably substantially point-like light sources. For example, the light source may be formed by a light-emitting diode, but also essentially by a gas discharge tube, a light bulb and/or the like. The light sources may also be combined into a matrix, which may also comprise a headlight control portion, by means of which the individual light sources can be controlled in a corresponding manner according to the control signal. In addition, the pixelated unit may also comprise a laser light source in the form of a controlled laser scanner, which may provide light distribution according to the control signal of the in-vehicle infotainment system 102. Furthermore, the pixelated unit may of course also comprise other optically active elements which can match the light emitted by the individual light source in a desired manner to output the light according to the light distribution, for example a refractive element such as a lens, a prism and/or the like, a reflective element such as a micromirror, a digital micromirror device (DMD), a combination thereof and/or the like.

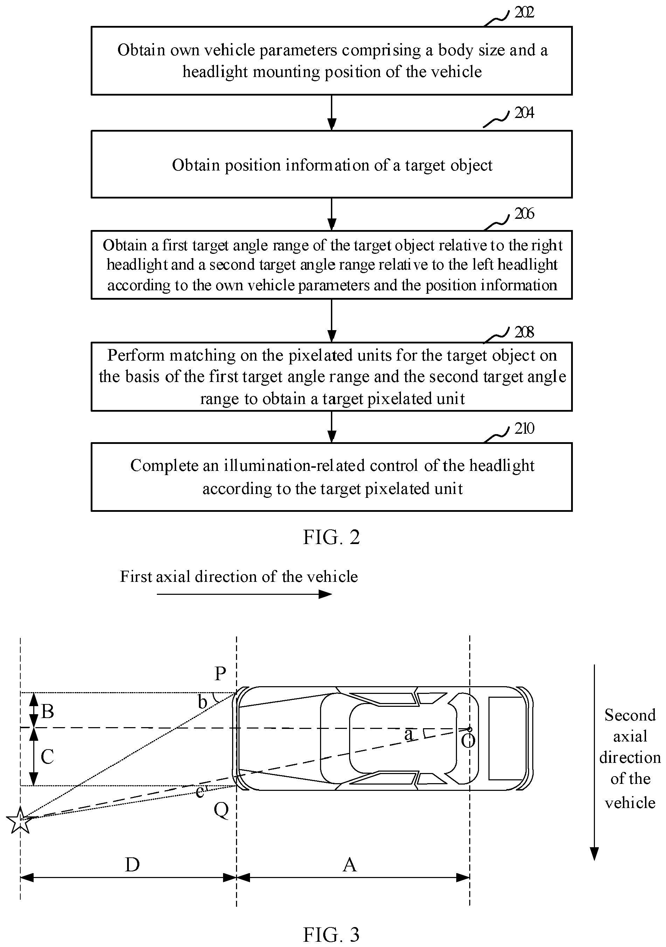

This implementation method can be applied to illumination control of any illumination device with pixelated units on the vehicle. In some implementations, the headlight may further comprise an illumination device mounted in the middle of the vehicle, on the roof, or even for rearward illumination. This embodiment uses left and right headlamps of a conventional vehicle as an application scenario to illustrate this implementation solution. As shown in FIG. 2, a method embodiment provided by the disclosure may comprise the following steps.

In step 202, own vehicle parameters comprising a body size and a headlight mounting position of the vehicle are obtained.

The headlight described in this embodiment may generally comprise an illumination device for forward illumination of the vehicle, such as a left headlamp or a right headlamp. In this embodiment, some parameter information of the vehicle may be obtained, such as the vehicle's size, length, width, height, or a distance from the chassis to the ground. It is also possible to obtain a mounting position of the headlight on the vehicle. The information of this mounting position may be represented by two-dimensional or three-dimensional spatial coordinates established with a selected vehicle origin as the coordinate origin. Of course, in some embodiments, other parameters may also be obtained. In this embodiment, for convenience of description, the body size, the headlight mounting position, etc. of the vehicle obtained may be called own vehicle parameters. Generally, the own vehicle parameters correspond to various vehicle models. The own vehicle parameters may be stored locally for direct use, or may be queried and called online according to the vehicle model.

In step 204, position information of a target object is obtained.

The position information of the target object is collected from various sensors equipped on the vehicle, such as cameras, radars, or infrared sensors. The target object includes a vehicle, a pedestrian, a tree, a sign, a moving or fixed obstacle, etc. The position information of the target object can be calculated on the basis of the data collected by the sensors, and may be absolute physical position information, or relative position information corresponding to a vehicle reference point or the headlight or other selected reference points. When the target object is a vehicle or a pedestrian, it is necessary to adjust the illumination area of the headlight and turn off the illumination in a specific area to avoid direct glare of strong light into the eyes and dazzling the oncoming vehicle or the pedestrian crossing the road. When the target object is a signal sign, it is also possible to identify same and reduce the brightness of the light to prevent reflected light from dazzling the driver, thereby improving the driving safety.

In this embodiment, the position information of the target object is obtained in real time, thereby realizing dynamic tracking of the target object.

In step 206, an angle range of the target object relative to the headlight is determined according to the own vehicle parameters and the position information.

In the application scenario in this embodiment, the headlight may comprise a left headlight and a right headlight of the vehicle. Therefore, the angle range of the target object relative to the headlight may comprise a first target angle range of the target object relative to the right headlight and a second target angle range relative to the left headlight. Of course, the solution of this embodiment may be separately and independently applied to the illumination control of one headlight.

The first target angle range and the second target angle range are both limited ranges of angles. A line connecting the midpoints of a front axle and a rear axle is defined as a central axis, and the vehicle is symmetrical in the left and right directions relative to the central axis. Taking a vertical plane in front of the vehicle that is perpendicular to the central axis as a reference plane, the direction parallel to the transverse extension on the reference plane is defined as the transverse direction, and the direction parallel to the longitudinal extension on the reference plane is defined as the longitudinal direction. The first target angle range and the second target angle range each comprise a transverse boundary angle and a longitudinal boundary angle.

The boundary angles of the first target angle range and the second target angle range may be positive or negative. For example, when the target object appears in front of the vehicle and on the left side of the central axis, the two transverse boundary angles of the target angle ranges are negative. When the target object appears in front of the vehicle and on the right side of the central axis, the two transverse boundary angles of the target angle ranges are positive. When the target object appears in front of the vehicle and on the central axis, the transverse boundary angle of one of the target angle ranges is negative, and the transverse boundary angle of the other is positive.

The corresponding target angle ranges are obtained respectively for the left headlight and the right headlight, a target area is accurately obtained according to the target angle ranges, and for the target area, the illumination mode or the brightness is adjusted, or the illumination is turned off/on, to achieve precise illumination control.

In step 208, a target pixelated unit among the pixelated units is matched with the target object on the basis of the angle range.

In this embodiment, matching may be performed on the pixelated units on the basis of the first target angle range and the second target angle range, to obtain the target pixelated unit.

The target area of the right headlight is determined by the first target angle range, and the target area of the left headlight is determined by the second target angle range. The target area of the right headlight is matched with the pixelated unit responsible for the illumination of this target area, and the target area of the left headlight is matched with the pixelated unit responsible for the illumination of this area. The target pixelated unit is obtained according to the corresponding matching pixelated units of the left headlight and the right headlight.

In step 210, illumination control is performed on the headlight according to the target pixelated unit.

The target pixelated unit is determined, a control signal is sent to the target pixelated unit, and the target pixelated unit completes the illumination control according to the control signal. Specific illumination control actions are performed to turn on or off the pixelated units for the area of the target object according to vehicle requirements. In some embodiments, the brightness within the target area may also be adjusted.

In the illumination control method described above, each pixelated unit can be independently controlled to turn on or off, improving the illumination range control accuracy. Moreover, in the disclosure, since the own vehicle parameters are integrated into the calculation of the corresponding target angle ranges of the left headlight and the right headlight for different models and different headlight mounting positions, the matching accuracy of the pixelated units is greatly improved, thereby achieving precise control.

In some other embodiments provided by the disclosure, when the vehicle comprises a plurality of headlights, for different headlights, respective independent software control schemes are used to realize illumination control of the corresponding headlights.

In this way, the solutions of the embodiments provided by the disclosure can use independent software control methods for the left headlight and the right headlight to achieve more precise illumination control, solving the technical pain point that in traditional technology, the left and right headlights use the same control scheme and the anti-dazzle headlamps may be turned off at specific positions in areas other than the target object in front of the vehicle, resulting in blind spots and posing a great safety threat. The most effective and reliable illumination is ensured while preventing dazzling to the pedestrian and the vehicle. Of course, the above embodiment scenario only illustrates the scenario where the left and right headlamps are controlled independently. When the illumination control is required for a plurality of pixelated unit illumination apparatuses on the vehicle, each illumination apparatus can use all or some of the steps in the above method embodiment to implement the illumination control.

It should be noted that the "independent" in the expression "independent software control scheme" described in this embodiment is not limited to the complete isolation of the illumination control of each headlight (which may be completely isolated, or in which there may be data sharing or calculation sharing). For example, in one implementation, it is possible that for the obtaining of the vehicle parameters, the position of target object, etc. at the beginning, software program execution processors of the left and right headlamps respectively obtain their own data, and their respective processors (which are logically divided, for example, they are different software controls distinguished by threads or processes, but in fact they may be the same physical processor) each calculate the position information of the target object, the angle range and the target pixelated unit in the respective headlamp, and then each control the turning on and off of the target pixelated unit in the respective headlamp. In some other implementations, it is also possible that part of the data may be shared or jointly calculated, until when controlling the pixelated units in each headlamp module, each controls the target pixelated unit in each headlamp.

The disclosure provides a solution for pixel-level refined headlight control. Further, the headlight can be further controlled to adopt different illumination strategies according to the type of the target object. Specifically, in another embodiment of the illumination control method provided by the disclosure, performing illumination control on the headlight according to the target pixelated unit comprises:

> determining the type of the target object; and
> performing a corresponding headlight illumination control strategy according to the type of the target object.

In this embodiment, the type of the target object can be obtained on the basis of data analysis of radar sensors, visual sensors, etc., and then an illumination control strategy corresponding to the type of the target object is adopted on the basis of the different type of the target object, so that the vehicle illumination control is more refined, the illumination effect is more intelligent, and the user's vehicle lighting experience is improved.

In some specific embodiment application scenarios, performing a corresponding headlight illumination control strategy according to the type of the target object consists in that

> when the type of the target object is a vehicle or a pedestrian, the headlight illumination control strategy comprises controlling the turning on or off of the target pixelated unit;
> and/or
> when the type of the target object is a sign, the headlight illumination control strategy comprises adjusting down the brightness of the target pixelated unit.

For example, when the target object is a vehicle or a pedestrian, it is necessary to adjust the illumination area of the headlight and turn off the illumination in a specific area to avoid direct glare of strong light into the eyes and dazzling the oncoming vehicle or the pedestrian crossing the road. When the target object is a signal sign, it is also possible to identify same and reduce the brightness of the light to prevent reflected light from dazzling the driver, thereby improving the driving safety.

In some application scenarios, there may be more than one target object. In order to achieve more refined control of the headlight in multi-target-object scenarios, reduce interference to other vehicles and pedestrians, and improve the driving safety of the own vehicle, the disclosure also provides another illumination control method for a vehicle. When there are a plurality of target objects, matching a target pixelated unit among the pixelated units with the target object comprises:

> matching a first target pixelated unit among the pixelated units of the headlight respectively with each target object; and
> calculating an overlapping pixelated unit of the first target pixelated units of the plurality of target objects; and
> performing illumination control on the headlight according to the target pixelated unit comprises:
> implementing a control strategy for turning on or off the target pixelated unit on the overlapping pixelated unit, and implementing a control strategy for adjusting the brightness of the first target pixelated units on the first target pixelated units.

In the solution of this embodiment, when there are a plurality of target objects, it is possible to choose an illumination control strategy for turning off an overlapping area of the pixelated units corresponding to the plurality of target objects, and reducing the brightness of the non-overlapping areas, so that it is possible to not only prevent too many light sources from being turned off, which results in a significant decrease in brightness, but also to cope with complex road conditions in an effectively adaptive and intelligently adjustable manner, thereby improving the user's lighting experience while ensuring the driving safety.

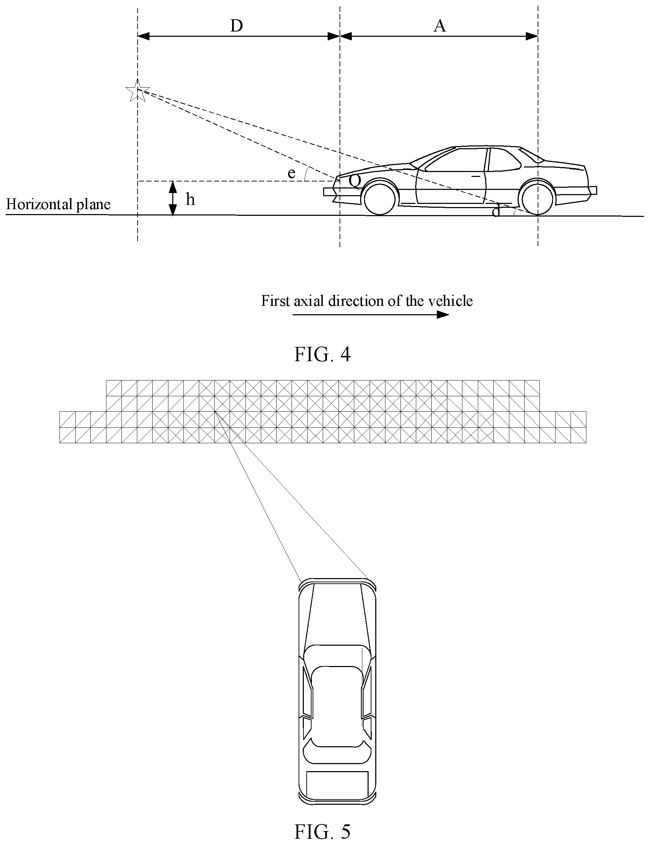

In one embodiment, as shown in FIGS. 3 and 4, in step 202, the headlight comprises a left headlight and a right headlight, and obtaining own vehicle parameters comprising a body size and a headlight mounting position of the vehicle comprises the following steps.

In step 302, a reference point is obtained from the vehicle. The reference point comprises a vehicle origin O, a first center point P corresponding to the right headlight and a second center point Q corresponding to the left headlight.

The vehicle origin O is located on the vehicle, which is related to the mounting positions of sensors, etc. on the vehicle. The first center point P and the second center point Q are respectively located on the right headlight and the left headlight. The center point is not a center point in the sense of shape and structure, but is defined in the software program, and is a reference point for obtaining the first target angle range and the second target angle range. The first center point P and the second center point Q are located at the same height, and are arranged symmetrically in the left and right directions with respect to the vehicle.

In step 304, a first distance of the first center point P or the second center point Q relative to the vehicle origin O is obtained along a first axial direction of the vehicle.

The first axial direction of the vehicle refers to the direction parallel to the central axis, which is the straight line where the center of the front axle and the center of the rear axle are located. Since the first center point and the second center point are symmetrical, in the first axial direction of the vehicle, the distances from the first center point and the second center point to the vehicle origin O are equal, and are both the line segment length A in FIG. 3.

In step 306, a second distance of the first center point P relative to the vehicle origin O is obtained along a second axial direction of the vehicle.

The second axial direction of the vehicle refers to an axial direction of a wheel, and the second distance between the first center point P and the vehicle origin O is the line segment length B in FIG. 3.

In step 308, a third distance of the second center point Q relative to the vehicle origin O is obtained along a second axial direction of the vehicle.

The third distance between the second center point Q and the vehicle origin O is the line segment length C in FIG. 3.

In step 310, a height above the ground of the first center point P or the second center point Q is obtained.

Since the first center point P and the second center point Q are symmetrical, the heights above the ground of the first center point P and the second center point Q are equal, and are both the line segment length h in FIG. 4.

In step 312, the own vehicle parameters are determined according to the first distance, the second distance, the third distance and the height above the ground.

In one embodiment, as shown in FIGS. 3 and 4, in step 204, obtaining position information of the target object comprises the following steps.

In step 402, environmental information in front of the vehicle is collected.

The environmental information in front of the vehicle is collected by a camera equipped on the vehicle, and the environmental information is displayed in the form of an image. The camera has a certain field of view, and the range of environmental information is determined according to the field of view, such as a transverse range of -30° to 30°.

In one embodiment, there may be a certain deviation between the field of view range and the illumination range of the headlight. The environmental information may be cut first to narrow its range to the illumination range of the headlight, such as -25° to 25° in the transverse direction, to improve the processing efficiency.

In step 404, a target boundary of the target object is determined on the basis of the environmental information.

Target detection technology is used to obtain the target object in the environmental information. The target detection technology can not only obtain the category of the target object, but also obtain the specific position of the target object in the image. A target detection algorithm generally samples a large number of areas in the input image, then determines whether these areas contain the target object of interest, and adjusts edges of the areas to more accurately predict a ground-truth bounding box of the target object. The target boundary can be determined by this ground-truth bounding box.

In one embodiment, image compression may be performed on the collected environmental information. For example, the image may be compressed into a file with a resolution of 8 * 200. The number of target objects that can be detected in the compressed image can break through the limitations of traditional algorithms, thereby improving the algorithm performance.

In one embodiment, there may be a plurality of target objects in the collected environmental information, and the plurality of target objects should be matched with target pixelated unit and controlled simultaneously. The control scheme can be described with reference to the foregoing embodiments.

In step 406, a plurality of key points are selected from the target boundary.

The ground-truth bounding box is a rectangular box, and key points are taken from the four sides of the ground-truth bounding box. In general, the midpoints of the four sides of the ground-truth bounding box are used as the key points, so that four key points can be obtained.

In step 408, for each of the key points, an included angle, projected onto a horizontal plane, between a straight line where the key point and the vehicle origin O are located and the first axial direction of the vehicle is obtained, and a transverse angle is determined according to the included angle projected onto the horizontal plane.

A spatial included angle is formed between the straight line where the key point and the vehicle origin O are located and the first axial direction of the vehicle, and this included angle is projected onto the horizontal plane to obtain the transverse angle, which is ∠a in FIG. 3.

In step 410, for each of the key points, an included angle between the straight line where the key point and the vehicle origin O are located and the horizontal plane is obtained, and a longitudinal angle is determined according to the included angle with the horizontal plane.

The included angle between the straight line where the key point and the vehicle origin O are located and the horizontal plane is used to obtain the longitudinal angle, which is ∠d in FIG. 4.

In step 412, a fourth distance of each of the key points relative to the first center point P or the second center point Q is obtained along the first axial direction of the vehicle.

A ranging sensor equipped on the vehicle is used to obtain the fourth distance of each of the key points relative to the first center point P or the second center point Q along the first axial direction of the vehicle, which is the line segment length D in FIG. 3.

In step 414, the position information is determined according to the transverse angle, the longitudinal angle and the fourth distance.

In one embodiment, as shown in FIGS. 3 and 4, in step 206, determining an angle range of the target object relative to the headlight according to the own vehicle parameters and the position information comprises the following steps.

In step 502, a first target transverse angle corresponding to each of the key points is determined according to the transverse angle ∠a, the first distance A, the fourth distance D and the second distance B. The first target transverse angle being an included angle, projected onto the horizontal plane, between a straight line where the key point and the first center point P are located and the first axial direction of the vehicle.

Each of the key points corresponds to a transverse angle ∠a, a first distance A, a fourth distance D and a second distance B. Trigonometric functions and inverse trigonometric functions are used to calculate the first target transverse angle corresponding to each of the key points. The first target transverse angle is ∠b in FIG. 3. The calculation formula of ∠b is:

$$\angle b= \arctan \frac{\tan \angle a \times (A+D)+B}{D}.$$

In step 504, a second target transverse angle corresponding to each of the key points is determined according to the transverse angle ∠a, the first distance A, the fourth distance D and the third distance C. The second target transverse angle is an included angle, projected onto the horizontal plane, between a straight line where the key point and the second center point Q are located and the first axial direction of the vehicle.

Each of the key points corresponds to a transverse angle ∠a, a first distance A, a fourth distance D and a third distance C. Trigonometric functions and inverse trigonometric functions are used to calculate the second target transverse angle corresponding to each of the key points. The second target transverse angle is ∠c in FIG. 3. The calculation formula of Lc is:

$$\angle c= \arctan \frac{\tan \angle a \times (A+D)-C}{D}.$$

In step 506, a target longitudinal angle corresponding to each of the key points is determined according to the longitudinal angle ∠d, the first distance A, the fourth distance D and the height h above the ground. The target longitudinal angle is an included angle between the straight line where the first center point P or the second center point Q and the key point are located and the horizontal plane.

Each of the key points corresponds to a longitudinal angle ∠d, a first distance A, a fourth distance D and a height h above the ground. Trigonometric functions and inverse trigonometric functions are used to calculate the target longitudinal angle corresponding to each of the key points. The target longitudinal angle is ∠e in FIG. 4. The calculation formula of Le is:

$$\angle e= \arctan \frac{\tan \angle d \times (A+D)-h}{D}.$$

In step 508, the first target angle range and the second target angle range are determined according to the first target transverse angle zb, the second target transverse angle ∠c and the target longitudinal angle ∠e.

The first target transverse angle ∠b, the second target transverse angle ∠c and the target longitudinal angle ∠e correspond to each key point. All the key points are combined to determine the first target angle range and the second target angle range.

In one embodiment, inn step 508, determining the first target angle range and the second target angle range according to the first target transverse angle ∠b, the second target transverse angle ∠c and the target longitudinal angle ∠e comprises the following steps.

In step 602, a target longitudinal angle range, which covers the target object with respect to the first center point P or the second center point Q, is determined according to the target longitudinal angle ∠e corresponding to each of the key points.

In step 604, a first target transverse angle range, which covers the target object with respect to the first center point P, is determined according to the first target transverse angle ∠b corresponding to each of the key points, and the first target angle range is determined according to the first target transverse angle range and the target longitudinal angle range.

In step 606, a second target transverse angle range, which covers the target object with respect to the second center point Q, is determined according to the second target transverse angle ∠c corresponding to each of the key points, and the second target angle range is determined according to the second target transverse angle range and the target longitudinal angle range.

The vertical plane in front of the vehicle that is perpendicular to the central axis is defined as a reference plane, and the target boundary is located on the reference plane. The target boundary has four sides, i.e., top, bottom, left and right sides, and the midpoints of the four sides are taken as key points. The target longitudinal angle ∠e corresponding to the top key point and the bottom key point of the target boundary can determine the target longitudinal angle range. The first target transverse angle ∠b corresponding to the left key point and the right key point of the target boundary can determine the first target transverse angle range relative to the first center point P. The second target transverse angle ∠c corresponding to the left key point and the right key point of the target boundary can determine the second target transverse angle range relative to the second center point Q.

The first target range angle of the target boundary relative to the right headlight is determined by means of the first target transverse angle range and the target longitudinal angle range. The second target range angle of the target boundary relative to the left headlight is determined by means of the second target transverse angle range and the target longitudinal angle range.

With the first target angle range and the second target angle range, the position information of the target object relative to the entire vehicle is converted into identifiable angle information relative to the right headlight and the left headlight. This conversion process directly affects the illumination control accuracy, and facilitates the subsequent independent control of the pixelated units of the right headlight and the left headlight. The control accuracy is higher compared with the traditional technology of integral control of the left and right headlights.

In one embodiment, in step 208, performing matching on the pixelated units on the basis of the first target angle range and the second target angle range to obtain the target pixelated unit comprises: obtaining a transverse boundary angle and a longitudinal boundary angle corresponding to each of the pixelated units; comparing the first target angle range with the transverse boundary angle and the longitudinal boundary angle of each of the pixelated units to obtain a first pixelated unit covering the first target angle range; comparing the second target angle range with the transverse boundary angle and the longitudinal boundary angle of each of the pixelated units to obtain a second pixelated unit covering the second target angle range; and determining the target pixelated unit according to the first pixelated unit and the second pixelated unit.

As shown in FIG. 5, the headlights of the vehicle form a certain range of illumination in front of the vehicle. The left side is the illumination range of the left headlight, the right side is the illumination range of the right headlight, and the middle part is an overlapping range of the left headlight and the right headlight. The illumination range is divided into cells, and each cell is controlled by a corresponding pixelated unit. The transverse boundary angle and longitudinal boundary angle corresponding to each pixelated unit are stored in the vehicle. The transverse boundary angle and the longitudinal boundary angle are determined by the range of the cell, and are both fixed ranges. For example, for a single pixelated unit, its corresponding transverse boundary angle may be -13° to -12°, and its longitudinal boundary angle may be 2° to 4°.

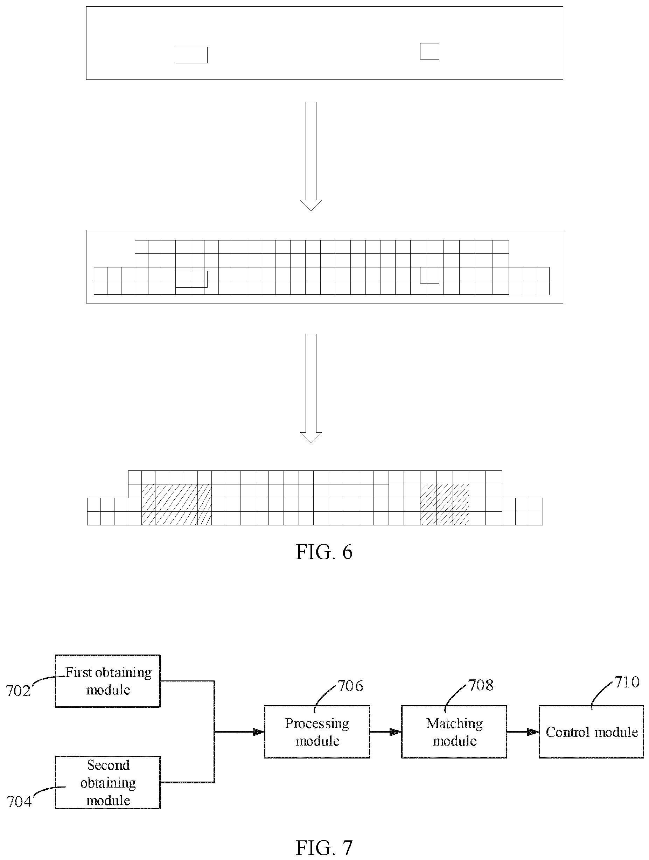

As shown in FIG. 6, when the range of the cell intersects with the range of the target object, the cell is occupied, otherwise it is not occupied. The occupied cell is marked with "1", and the unoccupied cell is marked with "0", so that the pixelated unit corresponding to the cell can be found according to the mark.

According to the first pixelated unit and the second pixelated unit, the target pixelated unit is finally determined, and then the illumination range is adjusted according to the target pixelated unit, such as turning off the illumination in the target area to prevent dazzling.

Based on the description of the foregoing embodiments and examples, in one embodiment, an illumination control method comprises:

obtaining a reference point from the vehicle; the reference point comprising a vehicle origin, a first center point corresponding to the right headlight and a second center point corresponding to the left headlight;
obtaining a first distance of the first center point or the second center point relative to the vehicle origin along a first axial direction of the vehicle;
obtaining a second distance of the first center point relative to the vehicle origin along a second axial direction of the vehicle;
obtaining a third distance of the second center point relative to the vehicle origin along the second axial direction of the vehicle;

obtaining a height above the ground of the first center point or the second center point; and
determining the own vehicle parameters according to the first distance, the second distance, the third distance and the height above the ground.

In another method embodiment, obtaining position information of a target object comprises:

collecting environmental information in front of the vehicle;
determining a target boundary of the target object on the basis of the environmental information;
selecting a plurality of key points from the target boundary;
obtaining, for each of the key points, an included angle, projected onto a horizontal plane, between a straight line where the key point and the vehicle origin are located and the first axial direction of the vehicle, and determining a transverse angle according to the included angle projected onto the horizontal plane;
obtaining, for each of the key points, an included angle between the straight line where the key point and the vehicle origin are located and the horizontal plane, and determining a longitudinal angle according to the included angle with the horizontal plane;
obtaining a fourth distance of each of the key points relative to the first center point or the second center point along the first axial direction of the vehicle; and
determining the position information according to the transverse angle, the longitudinal angle and the fourth distance.

In another embodiment, obtaining a first target angle range of the target object relative to the right headlight and a second target angle range relative to the left headlight on the basis of the own vehicle parameters and the position information comprises:

determining a first target transverse angle corresponding to each of the key points according to the transverse angle, the first distance, the fourth distance and the second distance; the first target transverse angle being an included angle, projected onto the horizontal plane, between a straight line where the key point and the first center point are located and the first axial direction of the vehicle;
determining a second target transverse angle corresponding to each of the key points according to the transverse angle, the first distance, the fourth distance and the third distance; the second target transverse angle being an included angle, projected onto the horizontal plane, between a straight line where the key point and the second center point are located and the first axial direction of the vehicle;
determining a target longitudinal angle corresponding to each of the key points according to the longitudinal angle, the first distance, the fourth distance and the height above the ground; the target longitudinal angle being an included angle between the straight line where the first center point or the second center point and the key point are located and the horizontal plane; and

determining a target longitudinal angle range, which covers the target object with respect to the first center point or the second center point, according to the target longitudinal angle corresponding to each of the key points.

In another embodiment of the method, determining the first target angle range and the second target angle range according to the first target transverse angle, the second target transverse angle and the target longitudinal angle comprises:

determining a first target transverse angle range, which covers the target object with respect to the first center point, according to the first target transverse angle corresponding to each of the key points, and determining the first target angle range according to the first target transverse angle range and the target longitudinal angle range; and

determining a second target transverse angle range, which covers the target object with respect to the second center point, according to the second target transverse angle corresponding to each of the key points, and determining the second target angle range according to the second target transverse angle range and the target longitudinal angle range.

In another embodiment of the method, when the headlight comprises a left headlight and a right headlight, determining an angle range of the target object relative to the headlight according to the own vehicle parameters and the position information comprises: obtaining a first target angle range of the target object relative to the right headlight and a second target angle range relative to the left headlight on the basis of the own vehicle parameters and the position information, and matching a target pixelated unit among the pixelated units with the target object on the basis of the angle range comprises:

obtaining a transverse boundary angle and a longitudinal boundary angle corresponding to each of the pixelated units;

comparing the first target angle range with the transverse boundary angle and the longitudinal boundary angle of each of the pixelated units to obtain a first pixelated unit covering the first target angle range;

comparing the second target angle range with the transverse boundary angle and the longitudinal boundary angle of each of the pixelated units to obtain a second pixelated unit covering the second target angle range; and

determining the target pixelated unit according to the first pixelated unit and the second pixelated unit.

In order to achieve a better illumination effect, in one embodiment, a transition shadow algorithm is added. The transition shadow algorithm is an algorithm configured to control the illumination brightness, and can perform brightness transition according to the current brightness state and a target brightness state to achieve a smooth formation effect in dark areas.

It should be understood that although the steps in the flowcharts involved in the above embodiments are shown in sequence as indicated by the arrows, these steps are not necessarily executed in the order indicated by the arrows. Unless explicitly stated herein, there is no strict order restriction on the execution of these steps, and these steps can be executed in other orders. Moreover, at least some of the steps in the flowcharts involved in the above embodiments may comprise a plurality of steps or stages. These steps or stages are not necessarily executed at the same time, but may be executed at different times. The execution order of these steps or stages is not necessarily sequential, but they may be performed in turn or alternately with other steps or at least some of the steps or stages in other steps.

Based on the same inventive concept, an embodiment of the disclosure also provides an illumination control device for implementing the illumination control method mentioned above. The solution to the problem provided by this device is similar to the solution described in the above method. Therefore, for the specific definitions in one or more illumination control device embodiments provided below, reference may be made to the above definitions of the illumination control method, and details are not described herein again.

In one embodiment, as shown in FIG. 7, an illumination control device is provided for a vehicle comprising a left headlight and a right headlight. Each of the left headlight and the right headlight comprises a number of independently controlled pixelated units. The device comprises: a first obtaining module 702, a second obtaining module 704, a processing module 706, a matching module 708 and a control module 710.

The first obtaining module 702 is configured to obtain own vehicle parameters comprising a body size and a headlight mounting position of the vehicle.

The second obtaining module 704 is configured to obtain position information of a target object.

The processing module 706 is configured to determine an angle range of the headlight on the basis of the own vehicle parameters and the position information.

The matching module 708 is configured to match a target pixelated unit among the pixelated units with the target object on the basis of the angle range.

The control module 710 is configured to perform illumination control on the headlight according to the target pixelated unit.

In one embodiment, when the vehicle comprises a plurality of headlights, for different headlights, respective independent software control schemes are used to realize illumination control of the corresponding headlights.

The control module 710 is further configured such that performing illumination control on the headlight according to the target pixelated unit comprises: determining the type of the target object; and performing a corresponding headlight illumination control strategy according to the type of the target object.

The control module 710 is further configured such that when the type of the target object is a vehicle or a pedestrian, the headlight illumination control strategy comprises controlling the turning on or off of the target pixelated unit; and/or when the type of the target object is a sign, the headlight illumination control strategy comprises adjusting down the brightness of the target pixelated unit. When there are a plurality of target objects, the matching module 708 is further configured for matching a first target pixelated unit among the pixelated units of the headlight respectively with each target object; and calculating an overlapping pixelated unit of the first target pixelated units of the plurality of target objects. The control module 710 is further configured for implementing a control strategy for turning on or off the target pixelated unit on the overlapping pixelated unit, and implementing a control strategy for adjusting the brightness of the first target pixelated units on the first target pixelated units.

The headlight comprises a left headlight and a right headlight, and the first obtaining module 702 is further configured for obtaining a reference point from the vehicle; the reference point comprising a vehicle origin, a first center point corresponding to the right headlight and a second center point corresponding to the left headlight; obtaining a first distance of the first center point or the second center point relative to the vehicle origin along a first axial direction of the vehicle; obtaining a second distance of the first center point relative to the vehicle origin along a second axial direction of the vehicle; obtaining a third distance of the second center point relative to the vehicle origin along the second axial direction of the vehicle; obtaining a height above the ground of the first center point or the second center point; and determining the own vehicle parameters according to the first distance, the second distance, the third distance and the height above the ground.

The second obtaining module 704 is further configured for collecting environmental information in front of the vehicle; determining a target boundary of the target object on the basis of the environmental information; selecting a plurality of key points from the target boundary; obtaining, for each of the key points, an included angle, projected onto a horizontal plane, between a straight line where the key point and the vehicle origin are located and the first axial direction of the vehicle, and determining a transverse angle according to the included angle projected onto the horizontal plane; obtaining, for each of the key points, an included angle between the straight line where the key point and the vehicle origin are located and the horizontal plane, and determining a longitudinal angle according to the included angle with the horizontal plane; obtaining a fourth distance of each of the key points relative to the first center point or the second center point along the first axial direction of the vehicle; and determining the position information according to the transverse angle, the longitudinal angle and the fourth distance.

The processing module 706 is further configured for determining a first target transverse angle corresponding to each of the key points according to the transverse angle, the first distance, the fourth distance and the second distance; the first target transverse angle being an included angle, projected onto the horizontal plane, between a straight line where the key point and the first center point are located and the first axial direction of the vehicle; determining a second target transverse angle corresponding to each of the key points according to the transverse angle, the first distance, the fourth distance and the third distance; the second target transverse angle being an included angle, projected onto the horizontal plane, between a straight line where the key point and the second center point are located and the first axial direction of the vehicle; determining a target longitudinal angle corresponding to each of the key points according to the longitudinal angle, the first distance, the fourth distance and the height above the ground; the target longitudinal angle being an included angle between the straight line where the first center point or the second center point and the key point are located and the horizontal plane; and determining the first target angle range and the second target angle range according to the first target transverse angle, the second target transverse angle and the target longitudinal angle.

The processing module 706 is further configured for determining a target longitudinal angle range, which covers the target object with respect to the first center point or the second center point, according to the target longitudinal angle corresponding to each of the key points; determining a first target transverse angle range, which covers the target object with respect to the first center point, according to the first target transverse angle corresponding to each of the key points, and determining the first target angle range according to the first target transverse angle range and the target longitudinal angle range; and determining a second target transverse angle range, which covers the target object with respect to the second center point, according to the second target transverse angle corresponding to each of the key points, and determining the second target angle range according to the second target transverse angle range and the target longitudinal angle range.

The matching module 708 is further configured for obtaining a transverse boundary angle and a longitudinal boundary angle corresponding to each of the pixelated units; comparing the first target angle range with the transverse boundary angle and the longitudinal boundary angle of each of the pixelated units to obtain a first pixelated unit covering the first target angle range; comparing the second target angle range with the transverse boundary angle and the longitudinal boundary angle of each of the pixelated units to obtain a second pixelated unit covering the second target angle range; and determining the target pixelated unit according to the first pixelated unit and the second pixelated unit.

All or some of the modules in the illumination control device described above can be implemented by software, hardware and a combination thereof. Each of the modules described above may be embedded in or independent of a processor of a computer apparatus in the form of hardware, or may be stored in a memory of the computer apparatus in the form of software, so that the processor can call and execute the operations corresponding to the modules described above.

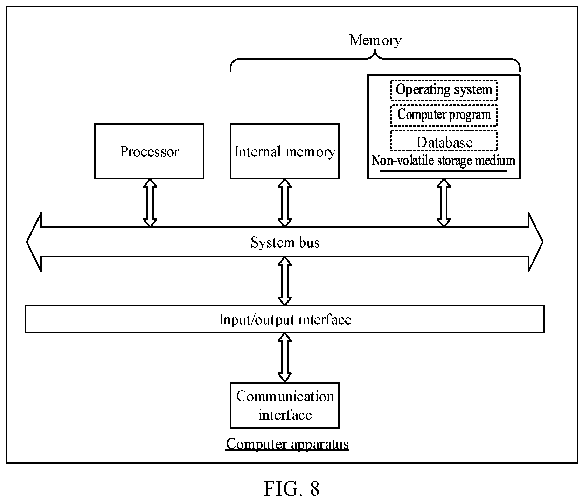

In one embodiment, a computer apparatus is provided, which may be a server, and the diagram of its internal structure may be shown in FIG. 8. The computer apparatus comprises a processor, a memory, an input/output (I/O) interface, and a communication interface. The processor and the memory are connected to the input/output interface via a system bus, and the communication interface is connected to the system bus via the input/output interface. The processor of the computer apparatus is configured to provide computing and control capabilities. The memory of the computer apparatus comprises a non-volatile storage medium and an internal memory. The non-volatile storage medium stores an operating system, a computer program and a database. The internal memory provides an environment for the operation of the operating system and the computer program in non-volatile storage medium. The database of the computer apparatus is configured to store sampled data, the own vehicle parameters, etc. The input/output interface of the computer apparatus is configured to exchange information between the processor and an external apparatus. The communication interface of the computer apparatus is configured to communicate with an external terminal through a network connection. The computer program, when executed by a processor, implements an illumination control method.

Those skilled in the art can understand that the structure shown in FIG. 8 is only a block diagram of a partial structure related to the solution of the disclosure, and does not constitute a limitation on the computer apparatus to which the solution of the disclosure is applied. A specific computer apparatus may comprise more or fewer components than shown, or have some components combined, or have a different arrangement of components.

In one embodiment, a computer apparatus is provided, comprising a memory and a processor. A computer program is stored in the memory. The processor, when executing the computer program, implements the steps of all the above method embodiments.

In one embodiment, a computer-readable storage medium is provided, having a computer program stored thereon. The computer program, when executed by a processor, implements the steps of all the above method embodiments.

In one embodiment, a computer program product is provided, comprising a computer program. The computer program, when executed by a processor, implements the steps of all the above method embodiments.

All the orientation terms "front", "rear", "left" and "right" appearing in the disclosure are based on the vehicle. For example, the head of the vehicle is in the front relative to the tail of the vehicle, the tail of the vehicle is in the rear relative to the head of the vehicle, the left side is the orientation of a left-view mirror with respect to the central axis, and the right side is the orientation of a right-view mirror with respect to the central axis.

It should be noted that each user information (including but not limited to user apparatus information, user personal information, etc.) and data (including but not limited to data used for analysis, stored data, displayed data, etc.) involved in the embodiments of the disclosure is information and data authorized by the user or fully authorized by all parties, and the collection, use and processing of relevant data need to comply with the relevant laws, regulations and standards of relevant countries and regions.

Those of ordinary skill in the art would be able to understand that implementation of all or some of the procedure of the embodiment methods described above could be achieved by hardware commanded by a computer program, which computer program can be stored in a non-volatile computer-readable storage medium and when executed, carry out a procedure as shown in the embodiments of the methods described above. Any reference to the memory, the database or other media used in the embodiments provided in the disclosure may comprise at least one of non-volatile and volatile memories. The non-volatile memory may include a read-only memory (ROM), a magnetic tape, a floppy disk, a flash memory, an optical memory, a high-density embedded non-volatile memory, a resistive random access memory (ReRAM), a magnetoresistive random access memory (MRAM), a ferroelectric random access memory (FRAM), a phase change memory (PCM), a graphene memory, etc. The volatile memory may include a random access memory (RAM), an external cache memory, etc. As an illustration and not a limitation, RAM may be in various forms, such as a static random access memory (SRAM) or a dynamic random access memory (DRAM). The database involved in the various embodiments provided in the disclosure may include at least one of a relational database and a non-relational database. The non-relational database may include a blockchain-based distributed database, etc., but is not limited thereto. The processor involved in the various embodiments provided in the disclosure may be a general-purpose processor, a central processing unit, a graphics processor, a digital signal processor, a programmable logic device, a quantum computing-based data processing logic device, etc., but is not limited thereto.

The technical features of the above embodiments may be combined arbitrarily. For the purpose of simplicity in description, all the possible combinations of the technical features in the above embodiments are not described. However, as long as there is no contradiction among the combinations of these technical features, they shall all fall within the scope of the specification.

The embodiments described above merely illustrate several implementations of the disclosure and are described relatively specifically and in detail, but should not be construed as limiting the patent scope of the disclosure. It should be noted that several variations and improvements may also be made by those of ordinary skill in the art without departing from the concept of the disclosure, and should fall within the scope of protection of the disclosure. Therefore, the scope of protection of the disclosure shall be subject to the appended claims.

**Claims**

1. An illumination control method for a vehicle comprising a headlight, the headlight comprising a number of independently controlled pixelated units, the method comprising:

   obtaining own vehicle parameters comprising a body size and a headlight mounting position of the vehicle;
   obtaining position information of a target object;
   determining an angle range of the target object relative to the headlight according to the own vehicle parameters and the position information;
   matching a target pixelated unit among the pixelated units with the target object on the basis of the angle range; and
   performing illumination control on the headlight according to the target pixelated unit.

2. The method according to claim 1, wherein when the vehicle comprises a plurality of headlights, for different headlights, respective independent software control scheme is used to realize illumination control of the corresponding headlight.

3. The method according to claim 1, wherein performing illumination control on the headlight according to the target pixelated unit comprises:

   determining the type of the target object; and
   performing a corresponding headlight illumination control strategy according to the type of the target object.

4. The method according to claim 3, wherein performing a corresponding headlight illumination control strategy according to the type of the target object consists in that

   when the type of the target object is a vehicle or a pedestrian, the headlight illumination control strategy comprises controlling the turning on or off of the target pixelated unit;
   and/or
   when the type of the target object is a sign, the headlight illumination control strategy comprises adjusting down the brightness of the target pixelated unit.

5. The method according to claim 1, wherein when there are a plurality of target objects, matching a target pixelated unit among the pixelated units with the target object comprises:

   matching a first target pixelated unit among the pixelated units of the headlight respectively with each target object; and
   calculating an overlapping pixelated unit of multiple first target pixelated units of the plurality of target objects; and
   performing illumination control on the headlight according to the target pixelated unit comprises: implementing a control strategy for turning on or off the target pixelated unit on the overlapping pixelated unit, and implementing a control strategy for adjusting the brightness of the first target pixelated unit on the first target pixelated unit.

6. The method according to claim 1, wherein the headlight comprises a left headlight and a right headlight, and obtaining own vehicle parameters comprising a body size and a headlight mounting position of the vehicle comprises:

   obtaining a reference point from the vehicle; the reference point comprising a vehicle origin, a first center point corresponding to the right headlight and a second center point corresponding to the left headlight;
   obtaining a first distance of the first center point or the second center point relative to the vehicle origin along a first axial direction of the vehicle;
   obtaining a second distance of the first center point relative to the vehicle origin along a second axial direction of the vehicle;
   obtaining a third distance of the second center point relative to the vehicle origin along the second axial direction of the vehicle;
   obtaining a height above the ground of the first center point or the second center point; and
   determining the own vehicle parameters according to the first distance, the second distance, the third distance and the height above the ground.

7. The method according to claim 6, wherein obtaining position information of a target object comprises:

collecting environmental information in front of the vehicle;
determining a target boundary of the target object on the basis of the environmental information;
selecting a plurality of key points from the target boundary;
obtaining, for each of the key points, an included angle, projected onto a horizontal plane, between a straight line where the key point and the vehicle origin are located and the first axial direction of the vehicle, and determining a transverse angle according to the included angle projected onto the horizontal plane;
obtaining, for each of the key points, an included angle between the straight line where the key point and the vehicle origin are located and the horizontal plane, and determining a longitudinal angle according to the included angle with the horizontal plane;
obtaining a fourth distance of each of the key points relative to the first center point or the second center point along the first axial direction of the vehicle; and
determining the position information according to the transverse angle, the longitudinal angle and the fourth distance.

8. The method according to claim 7, wherein determining an angle range of the target object relative to the headlight according to the own vehicle parameters and the position information comprises:

determining a first target transverse angle corresponding to each of the key points according to the transverse angle, the first distance, the fourth distance and the second distance; the first target transverse angle being an included angle, projected onto the horizontal plane, between a straight line where the key point and the first center point are located and the first axial direction of the vehicle;
determining a second target transverse angle corresponding to each of the key points according to the transverse angle, the first distance, the fourth distance and the third distance; the second target transverse angle being an included angle, projected onto the horizontal plane, between a straight line where the key point and the second center point are located and the first axial direction of the vehicle;
determining a target longitudinal angle corresponding to each of the key points according to the longitudinal angle, the first distance, the fourth distance and the height above the ground; the target longitudinal angle being an included angle between the straight line where the first center point or the second center point and the key point are located and the horizontal plane; and
determining a first target angle range and a second target angle range according to the first target transverse angle, the second target transverse angle and the target longitudinal angle.

9. The method according to claim 8, wherein determining a first target angle range and a second target angle range according to the first target transverse angle, the second target transverse angle and the target longitudinal angle comprises:

determining a target longitudinal angle range, which covers the target object with respect to the first center point or the second center point, according to the target longitudinal angle corresponding to each of the key points;
determining a first target transverse angle range, which covers the target object with respect to the first center point, according to the first target transverse angle corresponding to each of the key points, and determining the first target angle range according to the first target transverse angle range and the target longitudinal angle range; and
determining a second target transverse angle range, which covers the target object with respect to the second center point, according to the second target transverse angle corresponding to each of the key points, and determining the second target angle range according to the second target transverse angle range and the target longitudinal angle range.

10. The method according to any one of claims 1-9, wherein when the headlight comprises a left headlight and a right headlight, determining an angle range of the target object relative to the headlight according to the own vehicle parameters and the position information comprises: obtaining a first target angle range of the target object relative to the right headlight and a second target angle range relative to the left headlight on the basis of the own vehicle parameters and the position information, and matching a target pixelated unit among the pixelated units with the target object on the basis of the angle range comprises:

obtaining a transverse boundary angle and a longitudinal boundary angle corresponding to each of the pixelated units;
comparing the first target angle range with the transverse boundary angle and the longitudinal boundary angle of each of the pixelated units to obtain a first pixelated unit covering the first target angle range;

comparing the second target angle range with the transverse boundary angle and the longitudinal boundary angle of each of the pixelated units to obtain a second pixelated unit covering the second target angle range; and

determining the target pixelated unit according to the first pixelated unit and the second pixelated unit.

11. An illumination control device for a vehicle comprising a headlight, the headlight comprising a number of independently controlled pixelated units, the device comprising:

a first obtaining module(702) configured to obtain own vehicle parameters comprising a body size and a headlight mounting position of the vehicle;

a second obtaining module(704) configured to obtain position information of a target object;

a processing module(706) configured to determine an angle range of the headlight according to the own vehicle parameters and the position information;

a matching module(708) configured to match a target pixelated unit among the pixelated units with the target object on the basis of the angle range; and

a control module(710) configured to perform illumination control on the headlight according to the target pixelated unit.

12. A computer apparatus, comprising a memory and a processor, a computer program being stored in the memory, wherein the processor, when executing the computer program, implements the steps of a method of any one of claims 1 to 9.

13. A computer-readable storage medium having a computer program stored thereon, wherein the computer program, when executed by a processor, implements the steps of a method of any one of claims 1 to 9.

14. A computer program product, comprising a computer program, wherein the computer program, when executed by a processor, implements the steps of a method of any one of claims 1 to 9.

15. A vehicle, comprising a headlight, wherein the headlight uses a method of any one of claims 1-9 to achieve illumination control.

FIG. 1

Obtain own vehicle parameters comprising a body size and a headlight mounting position of the vehicle

／ 202

Obtain position information of a target object

／ 204

Obtain a first target angle range of the target object relative to the right headlight and a second target angle range relative to the left headlight according to the own vehicle parameters and the position information

／ 206

Perform matching on the pixelated units for the target object on the basis of the first target angle range and the second target angle range to obtain a target pixelated unit

／ 208

Complete an illumination-related control of the headlight according to the target pixelated unit

／ 210

FIG. 2

First axial direction of the vehicle

Second axial direction of the vehicle

FIG. 3

First axial direction of the vehicle

FIG. 4

FIG. 5

FIG. 6

FIG. 7

Memory

Operating system

Computer program

Database

Non-volatile storage medium

Processor

Internal memory

System bus

Input/output interface

Communication
interface

Computer apparatus

FIG. 8

Europäisches
Patentamt

European
Patent Office

Office européen
des brevets

# EUROPEAN SEARCH REPORT

**Application Number**

EP 23 21 9559

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FR 3 104 674 A1 (VALEO VISION [FR]) 18 June 2021 (2021-06-18) * the whole document * ----- | 1-15 | INV. B60Q1/08 B60Q1/14 |
| X | US 2009/254247 A1 (OSANAI SATOSHI [JP]) 8 October 2009 (2009-10-08) * the whole document * ----- | 1-15 | |
| X | US 2019/176684 A1 (ZYCH NOAH [US]) 13 June 2019 (2019-06-13) * paragraphs [0064] - [0115]; figures 1-11 * ----- | 1-15 | |
| X | WO 2022/220187 A1 (KOITO MFG CO LTD) 20 October 2022 (2022-10-20) * paragraphs [0026] - [0074]; figures 1-12 * ----- | 1-15 | |
| | | | **TECHNICAL FIELDS SEARCHED (IPC)** B60Q |

The present search report has been drawn up for all claims

| Place of search | Date of completion of the search | Examiner |
|---|---|---|
| Munich | 17 May 2024 | Sarantopoulos, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 21 9559

This annex lists the patent family members relating to the patent documents cited in the above-mentioned European search report.
The members are as contained in the European Patent Office EDP file on
The European Patent Office is in no way liable for these particulars which are merely given for the purpose of information.

17-05-2024

| Patent document cited in search report | | Publication date | Patent family member(s) | | Publication date |
|---|---|---|---|---|---|
| FR 3104674 | A1 | 18-06-2021 | CN | 114867639 A | 05-08-2022 |
| | | | EP | 4077046 A1 | 26-10-2022 |
| | | | FR | 3104674 A1 | 18-06-2021 |
| | | | JP | 7354450 B2 | 02-10-2023 |
| | | | JP | 2023507355 A | 22-02-2023 |
| | | | US | 2023042933 A1 | 09-02-2023 |
| | | | WO | 2021122071 A1 | 24-06-2021 |
| US 2009254247 | A1 | 08-10-2009 | DE | 102009015824 A1 | 29-10-2009 |
| | | | US | 2009254247 A1 | 08-10-2009 |
| | | | US | 2013006480 A1 | 03-01-2013 |
| US 2019176684 | A1 | 13-06-2019 | EP | 3703978 A1 | 09-09-2020 |
| | | | JP | 2021505467 A | 18-02-2021 |
| | | | US | 2019176684 A1 | 13-06-2019 |
| | | | WO | 2019113145 A1 | 13-06-2019 |
| WO 2022220187 | A1 | 20-10-2022 | CN | 117120300 A | 24-11-2023 |
| | | | EP | 4324699 A1 | 21-02-2024 |
| | | | JP | WO2022220187 A1 | 20-10-2022 |
| | | | US | 2024017663 A1 | 18-01-2024 |
| | | | WO | 2022220187 A1 | 20-10-2022 |